# EUROPEAN PATENT APPLICATION

(11) **EP 2 883 845 A1**
(43) Date of publication of application: **17.06.2015**
(21) Application number: 13828460.9
(22) Date of filing: 09.07.2013
(51) Int. Cl.: C02F 1/44, B01D 63/14, B01D 65/02, B63B 13/00

(54) **LIQUID FILTER DEVICE AND BALLAST WATER TREATMENT DEVICE USING SAME**

(30) Priority: 09.08.2012 JP 2012176562
(71) Applicant: Sumitomo Electric Industries, Ltd., Osaka-shi, Osaka 541-0041 (JP)
(72) Inventor: UEYAMA, Munetsugu, Osaka-shi Osaka 554-0024 (JP); KANAZAWA, Shinichi, Osaka-shi Osaka 554-0024 (JP); NAKAI, Ryusuke, Osaka-shi Osaka 554-0024 (JP)
(74) Representative: Boult Wade Tennant
(86) International application number: PCT/JP2013/068701
(87) International publication number: WO 2014/024618

(57) **Abstract**

A liquid filtering device includes a filtration membrane unit, cleaning means that cleans a filtering surface of the filtration membrane unit from a side to which a water to be filtered is supplied, and pressure-detecting means that detects a differential pressure between before and after filtration by the filtration membrane unit, in which the filtration membrane unit includes two filtration membranes. A ballast water treatment apparatus includes the liquid filtering device, in which the liquid filtering device is used as a filtering device of seawater, and the ballast water treatment apparatus is carried in a ship.

## Description

### Technical Field

The present invention relates to a liquid filtering device including a filter for filtering suspensoid and the like. In particular, the present invention relates to a liquid filtering device that treats seawater for being carried in ships, and a ballast water treatment apparatus using the same.

### Background Art

Treatment of ballast water carried in ships has become an issue in recent years. Ballast water is seawater carried in a ship to provide safe voyage even when the ship is empty of cargo. Various methods for removing, killing, or inactivating microbes by purifying ballast water have been developed. PTL 1 discloses a device of treating ballast water, the device being invented by the inventors of the present invention. The device is a filtering device including a filter disposed as a cylinder around an axis line, provided to be rotatable around the axis line, and having a pleated shape folded in a radial direction of the cylinder; an untreated water nozzle for emitting untreated water toward an outer circumferential surface of the filter; a case provided to surround the filter, and including an outer cylindrical portion having a nozzle opening of the untreated water nozzle therein; a filtered water flow path for guiding filtered water that has been transmitted through the filter to outside of the case from within the cylinder of the filter; and a discharge flow path for discharging discharged water that was not filtered through the filter to the outside of the case.

### Citation List

### Patent Literature

PTL 1: Japanese Patent No. 4835785

### Disclosure of Invention

### Technical Problem

The device described in PTL 1 has a structure in which a surface of a filter is intermittently washed with untreated water while filtration is performed by the rotational filter. With this structure, a continuous filtration treatment with a high flow rate can be performed without conducting particular reverse cleaning or the like. In a ship carrying a large volume of several tens of thousands of tons or several hundred thousand tons, for example, a tanker or a cargo ship, it is necessary that treatment of ballast water be performed within a short time while the ship is berthed in port. Accordingly, the amount of ballast water treated per time reaches a level of several hundred tons to several thousand tons. For this reason, such a treatment device is a large facility. However, in a ship, there are limited spaces, such as in the bottom of the hull, where such a device can be installed. A reduction in the size of the device is desired, and in general, a space necessary for maintenance, such as changing the filter and cleaning the inside of the device, is also limited. Accordingly, it is necessary that the maintenance operation be minimized, and when an abnormality such as clogging of a filtration membrane occurs, the problem be detected early and a measure be taken.

In the device described in PTL 1, in the case where the effect of cleaning the filter is decreased and clogging occurs, a sufficient amount of filtered water cannot be ensured, and it becomes difficult to perform treatment within a limited time, unless particular means is provided. Such clogging can be detected by detecting the pressures inside and outside the filter. On the other hand, if a pinhole, breakage, or the like is generated in the filter, suspensoid and organisms that have not been filtered can permeate through the filter, even though the treatment proceeds. Such an abnormality does not easily cause a difference in the pressure between the inside and the outside, and thus the detection of the abnormality has been difficult. Accordingly, an object of the present invention is to provide a liquid filtering device having a high filtration treatment performance so as to be used in a ballast water treatment apparatus of a ship carrying a large volume of cargo, and capable of detecting breakage or the like of a filtration membrane with a simple structure.

### Solution to Problem

As a result of intensive studies, the inventors of the present invention focused on the points that clogging does not occur in a filter as long as a surface of the filter is constantly cleaned and the cleaning is performed and that when clogging occurs in a filter, the difference in the pressure between before filtration and after filtration increases, and completed the present invention. Specifically, the present invention provides a liquid filtering device including a filtration membrane unit; cleaning means that cleans a filtering surface of the filtration membrane unit from a side to which a water to be filtered is supplied; and pressure-detecting means that detects a differential pressure between before and after filtration by the filtration membrane unit, in which the filtration membrane unit includes two filtration membranes.

With this structure, even if breakage or the like occurs in one filtration membrane out of the two filtration membranes, the one filtration membrane being located on a side to which the water to be filtered is supplied (hereinafter also referred to as "outer filtration membrane"), as described below, filtration can be performed by the other filtration membrane (hereinafter also referred to as "inner filtration membrane") out of the two filtration membranes. Furthermore, the inner filtration membrane is gradually clogged because cleaning by the cleaning means does not function. Consequently, the pressure of the water to be filtered gradually increases, and an abnormality can be detected by the pressure-detecting means.

The cleaning means may be means that ejects the water to be filtered toward the filtering surface. The liquid filtering device may be configured so that cleaning by the cleaning means and filtration by the filtration membrane unit are performed at the same time. This structure is preferable in that a filtration treatment can be continuously performed for a long time and a high filtration treatment performance is provided.

The filtration membrane unit may include two filtration membranes disposed on a side surface of a cylindrical shape, the filtration membranes each having pleats with folds having alternating protrusions and recesses in a radial direction of the cylindrical shape. With this structure, the filtration area is increased, and a high filtration treatment performance can be provided in a limited space.

A gap between the two filtration membranes in the radial direction of the cylinder is preferably 1/2 times or more and less than 1 times a depth between a protrusion and a recess of the pleats. This is because contact between the filtration membranes is prevented as much as possible and a high space efficiency is ensured.

The filtration membrane unit may be configured to rotate about an axis of the cylindrical shape, and the cleaning means may include a nozzle that ejects the water to be filtered toward the filtering surface of the filtration membrane unit. This structure is preferable in that a high filtration treatment performance is provided in a limited space.

With the above structure, the liquid filtering device may include filtration membrane abnormality-detecting means that detects an abnormality of the filtration membranes by an increase in the differential pressure detected by the pressure-detecting means.

Furthermore, the invention provides a ballast water treatment apparatus including the liquid filtering device, in which the liquid filtering device is used as a filtering device of seawater, and the ballast water treatment apparatus is carried in a ship.

### Advantageous Effects of Invention

According to the present invention, it is possible to provide a liquid filtering device having a high filtration treatment performance so as to be used in a ballast water treatment apparatus, and capable of detecting breakage or the like of a filtration membrane with a simple structure.

### Brief Description of Drawings

[Fig. 1] Figure 1 is a schematic view illustrating basic components and an operation of a liquid filtering device of the present invention.
[Fig. 2] Figure 2 is a schematic longitudinal cross-sectional view showing an example of a structure of a liquid filtering device of the present invention.
[Fig. 3] Figure 3 is a schematic transverse cross-sectional view taken along line A-A in Fig. 2.
[Fig. 4] Figure 4 is a schematic view illustrating a pleated structure of a cylindrical filter provided in a liquid filtering device of the present invention.
[Fig. 5] Figure 5 is a view illustrating a gap between two filters in the structure shown in Fig. 4.
[Fig. 6] Figure 6 is a block diagram illustrating a structure of a ballast water treatment apparatus of the present invention.

### Reference Signs List

- 1: liquid filtering device
- 2: pressure-detecting means
- 2a, 2b: pressure sensor
- 2c: differential pressure detection unit
- 3: cleaning means
- 4: filtration membrane abnormality-detecting means
- 10: filtration membrane unit
- 11a, 11b: filtration membrane
- 12: support
- 20: device container
- 21: upper lid member
- 22: bottom lid member
- 24: rotating shaft
- 25: bearing
- 30: case
- 31: case outer cylindrical portion
- 32: case lid portion
- 33: case bottom portion
- 41: untreated water flow path
- 42: untreated water nozzle
- 43: central pipe
- 44: filtered water opening
- 45: filtered water flow path
- 46: discharge water flow path

- 47: water intake flow path
- 48: tank flow path
- 50: motor
- 100: liquid filtering device
- 110: pump
- 120: ultraviolet irradiation device
- 130: ballast water tank

### Description of Embodiments

A structure of a liquid filtering device according to the present invention will be described with reference to the drawings. Components assigned with the same reference numerals in different drawings represent the same or corresponding components. It should be noted that the present invention is not limited to the structures disclosed herein. The present invention is defined by Claims, and is intended to include meanings equivalent to Claims and all modifications within Claims.

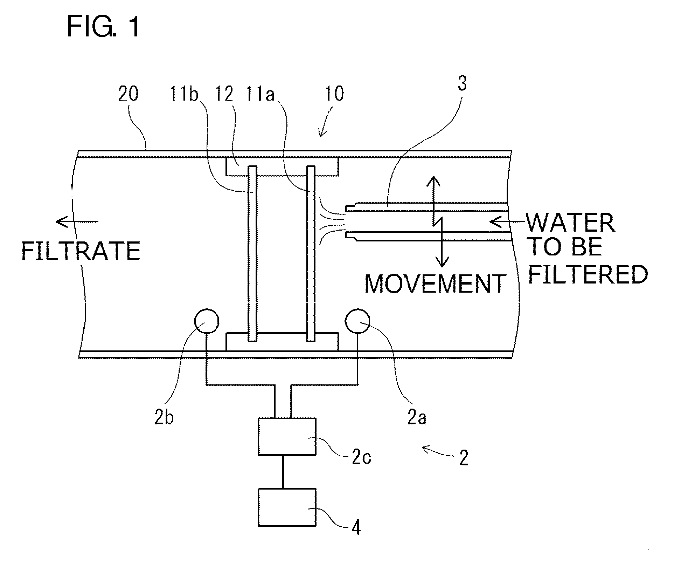

Figure 1 is a view illustrating basic components and an operation of a liquid filtering device 1 of the present invention. A filtration membrane unit 10 includes, as basic components, filtration membranes 11a and 11b and a support 12 that supports the filtration membranes 11a and 11b. The filtration membrane unit 10 is disposed so as to separate, in a device container 20, a water to be filtered supply side and a filtrate discharge side from each other. Thus, the filtration membrane unit 10 includes the two filtration membranes 11a and 11b. Cleaning means 3 that cleans a filtering surface from the water to be filtered supply side is provided. The filtering surface is a surface that directly contacts the water to be filtered and that faces the water to be filtered supply side of the filtration membrane 11a out of the filtration membranes of the filtration membrane unit 10. Figure 1 shows, as an example of the cleaning means 3, a structure in which a nozzle is moved along a filtering surface. The nozzle cleans the filtering surface with a jet flow by ejecting a water to be filtered toward the filtering surface. In the figure, the water to be filtered supplied from the water to be filtered supply side, which is the right-hand side of the drawing, is filtered by permeating through the filtration membrane unit 10 by the difference in the pressure. A filtrate after filtration is discharged from the filtrate discharge side, which is the left-hand side of the drawing, to the outside. This device includes a pressure-detecting means 2 that detects the differential pressure between the water to be filtered before filtration and the filtrate after filtration by the filtration membrane unit 10. The pressure-detecting means 2 includes a pressure sensor 2a that senses a pressure of the water to be filtered on the water to be filtered supply side, a pressure sensor 2b that senses a pressure of the filtrate on the filtrate discharge side, and a differential pressure detection unit 2c that detects a differential pressure from the output of these sensors. Furthermore, preferably provided is filtration membrane abnormality-detecting means 4 that detects the state of the filtration membranes in accordance with the output of the differential pressure detection unit 2c.

In a state where stable filtration is continued as described above, the differential pressure detected by the differential pressure detection unit 2c has a substantially stable value. Next, a description will be made of a case where an abnormality occurs in the device. As an example of an abnormal case, it is assumed that the cleaning effect is not sufficiently obtained because, for example, the amount of suspensoid is larger than the amount expected or a certain abnormality occurs in the cleaning means 3. In this case, the filtration membrane 11a is gradually clogged and the pressure on the water to be filtered supply side increases, resulting in the increase in the differential pressure detected by the differential pressure detection unit 2c. Usually, when such an increase in the differential pressure is detected, the problem can be solved by checking or improving the performance (for example, increasing the water flow, as shown in Fig. 1) of the cleaning means. As another example of an abnormal case, it is assumed that suspensoid and the like that should be filtered will permeate through a hole such as a pinhole or due to breakage if such a hole is formed in the filtration membrane 11a. In a common structure of a device including one filtration membrane, the abnormality of the filtration membrane may not be detected. Specifically, for example, unless suspensoid and the like in the filtrate are detected by another means, an abnormality in terms of the operation of the device will not be detected, and the device will apparently be in a state in which filtration proceeds stably. In contrast, in the case where two filtration membranes are provided as shown in Fig. 1, the filtration membrane 11b in the latter stage functions as a so-called backup. Suspensoid and the like permeating through the filtration membrane 11a are captured by the filtration membrane 11b. Thus, mixing of the suspensoid and the like in the filtrate can be prevented.

Such an abnormal state can be detected by the structure of the present invention. In the abnormality in which a hole is formed in the filtration membrane 11a, the cleaning means 3 cleans only the filtering surface of the filtration membrane 11a and does not act on the filtration membrane 11b. Consequently, suspensoid and the like gradually start to deposit on the surface of the filtration membrane 11b and clogging gradually occurs. With this occurrence of clogging, the pressure sensed by the pressure sensor 2a increases, and the value of the differential pressure detected in the differential pressure detection unit 2c increases. An abnormality can be recognized from the increase in the differential pressure. In this abnormality, even when the cleaning effect is improved, the increase in the differential pressure is not recovered. The filtration membrane abnormality-detecting means 4 is a detection device which determines an abnormality of the filtration membrane unit on the basis of the information of the differential pressure by using a microcomputer or the like and sends a notification regarding the abnormality to the outside by means of an alarm or the like. In addition to the information of the differential pressure from the differential pressure detection unit 2c, as shown in Fig. 1, a set pressure on the water to be filtered side during operation and information relating to the state of the cleaning means are preferably input to the filtration membrane abnormality-detecting means 4. The filtration membrane abnormality-detecting means 4 is preferably programmed so that, for example, if both the phenomenon that the differential pressure is increasing AND the phenomenon that there are no changes in the set pressure and cleaning means are satisfied, it is determined that an abnormal differential pressure is due to an abnormality of a filtration membrane. As described above, the present invention is advantageous in that even in the case where an abnormality in which suspensoid and the like permeate through a filtration membrane occurs, the abnormality can be detected while filtration proceeds normally.

In the above description, the differential pressure is detected by providing a pressure sensor on each of the water to be filtered side and the filtrate side. However, the structure is not limited thereto. For example, a pressure sensor may be provided only on the water to be filtered side on the assumption that the filtrate side is in a free outflow state and the pressure is substantially constant regardless of an abnormal state. In this case, the pressure on the water to be filtered side may be treated as a differential pressure. Furthermore, the number of pressure sensors is not limited to one. For example, a method may be employed in which an average of values of a plurality of pressure sensors is used. Alternatively, an abnormality can be artificially determined from a value output from a pressure sensor or a value of the differential pressure output from the differential pressure detection unit 2c without providing the filtration membrane abnormality-detecting means 4.

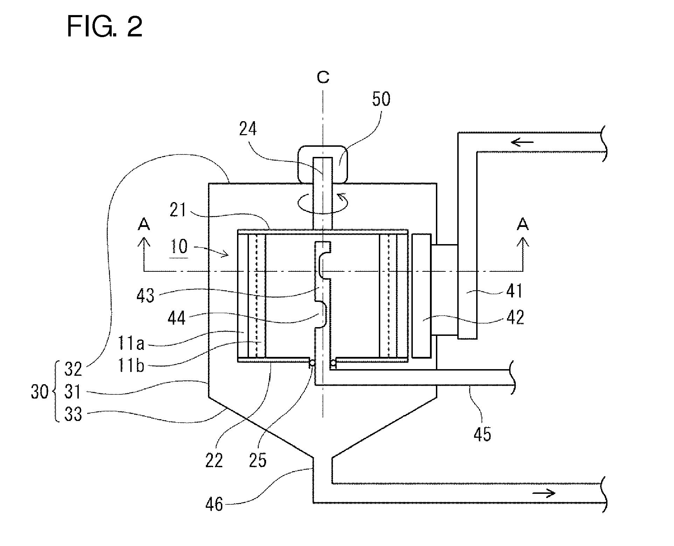

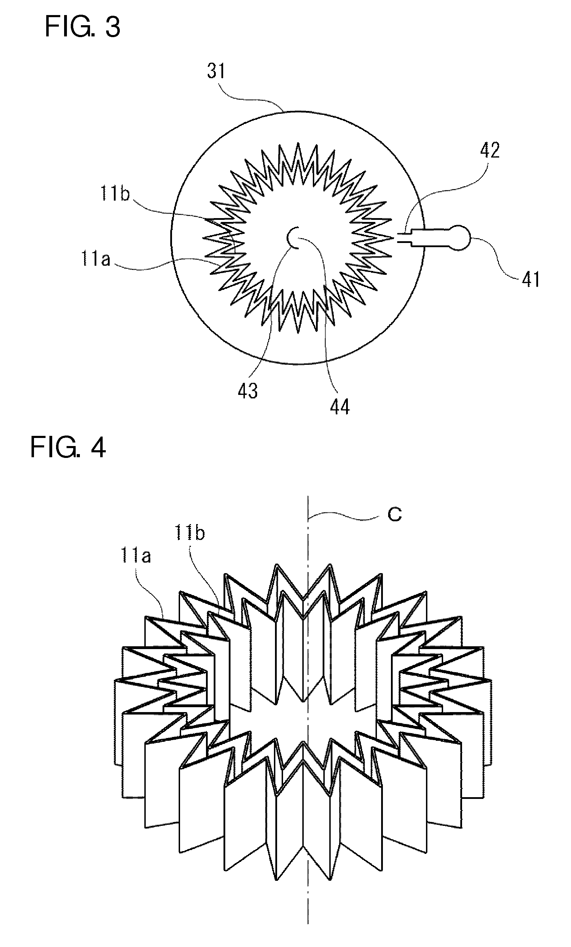

Next, a specific structural example in the case where the present invention is applied to a ballast water treatment apparatus will be described with reference to Figs. 2 and 3. Figures 2 and 3 are each a schematic view illustrating a typical structural example of a rotational filter filtering device serving as filtering means. Figure 2 is a longitudinal cross-sectional view showing a rotational filter filtering device. Figure 3 is a transverse cross-sectional view taken along line A-A in Fig. 2. A cylindrical filtration membrane unit 10 is disposed about an axis line C, which is the center of rotation, and is mounted to be rotatable about a central pipe 43 arranged in the center (the pipe does not rotate). The filtration membrane unit 10 includes a cylindrical filtration membrane on the side face of the cylinder, and an upper lid member 21 and a bottom lid member 22 which function as main supports. As shown in Fig. 3, the filtration membrane has a double structure including a filtration membrane 11a located outside the cylinder and a filtration membrane 11b located inside the cylinder. As a specific example of the filtration membrane, a pleated filter shown in the perspective view of Fig. 4 is preferably used. The pleated filter is produced by folding filtration membranes so as to have alternating protrusions and recesses in a radial direction of the cylinder, and a large filtration area can be obtained with this structure. Upper and lower surfaces of the filter are sealed in a watertight manner by the upper lid member 21 and the bottom lid member 22, respectively. The bottom lid member is rotatable with respect to the central pipe 43 by a watertight bearing 25. A rotating shaft 24 is provided on the upper lid member. The rotating shaft 24 is connected to a motor 50, and the entire filtration membrane unit 10 is rotated by driving the motor 50.

A case 30 is provided so as to cover the entire filtration membrane unit 10. The case 30 includes an outer cylindrical portion 31, a lid portion 32, and a bottom portion 33. A discharge water flow path 46 is provided on the bottom portion 33. Also provided are an untreated water flow path 41 for introducing seawater as untreated water into the case 30 and an untreated water nozzle 42 for ejecting the untreated water as cleaning water in a filtering surface direction of the filtration membrane 11 a. The untreated water nozzle 42 is provided to extend from the untreated water flow path 41 so as to have a nozzle opening thereof in the outer cylindrical portion 31 of the case 30.

In this example, the untreated water ejected from the untreated water nozzle 42 strikes the outer circumferential surface of the filtration membrane 11a, and an effect of cleaning the filtering surface is obtained by this pressure. The filtration membrane unit 10 is rotated by the motor 50, whereby a cleaning part is sequentially moved and the entire filtering surface can be cleaned. The number of rotations of the motor 50 may be constant or artificially and freely determined. The number of rotations of the motor 50 is preferably controlled in accordance with the state of filtration by detecting, for example, the turbidity of filtered water and the difference in the pressure between the inside and the outside of the filter.

The untreated water that was not filtered and suspensoid deposited in the case are successively discharged through the discharge water flow path 46 at the bottom of the case. As described above, this device has a feature that filtration proceeds while suspensoid and the remaining untreated water are continuously and constantly discharged. This feature is effective for ensuring a required throughput of 10 to 20 ton/h, and more than 100 ton/h of ballast water. The filtered water filtered through the filtration membrane unit 10 is guided to a filtered water flow path 45 through filtered water openings 44 provided in the central pipe 43, and led to the outside of the case.

A porous resin sheet is used as a base of the filtration membranes. Examples of the base that can be used include porous structures such as a stretched porous body, a porous body by phase separation, and a non-woven cloth that are composed of a material such as polyester, nylon, polyethylene, polypropylene, polyurethane, polytetrafluoroethylene (PTFE), or polyvinylidene fluoride (PVdF). As a treatment at a high flow rate is performed in the ballast water treatment, a non-woven cloth composed of a polyester such as polyethylene terephthalate is particularly suitably used. With regard to an example of the dimensions, the pleated filter has an outer diameter of 700 mm, a length in the axial direction of 320 mm, a height as an effective area of 280 mm, a pleated depth of 70 mm, and 420 pleats. For example, the effective area may be changed or a plurality of filters may be used in parallel in accordance with the required amount of treated water.

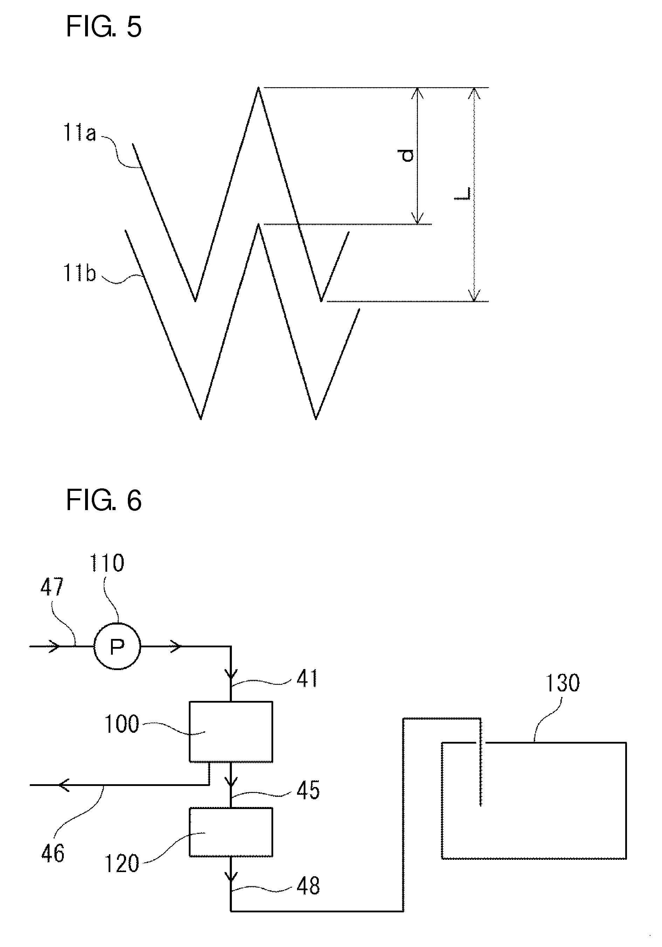

Figure 5 is a view illustrating a gap between the two filters in the structure shown in Fig. 4. The two filtration membranes 11a and 11b are pleated filters having the same shape. A depth between a protrusion and a recess of a pleated filter is represented by L (mm), and a gap between protrusions of the two pleated filters having the double structure is represented by d (mm). With regard to the advantages of the present invention, the gap between the two filtration membranes may be any value. However, in a structure in which cylindrical pleated filters are used as the filtration membranes, a limitation in terms of structure is generated. In this case, the protrusion gap d, which is a gap between the two filtration membranes is preferably at least 1/2 times the depth L between a protrusion and a recess and less than 1 times the depth L, that is, the relationship 0.5L ≤ d < L is preferably satisfied. When the protrusion gap d exceeds 1 times the depth L, the circle of the filtration membrane 11b disposed inside the cylinder becomes small, and the area of the filtering surface cannot be sufficiently ensured. In the case where, for example, the outer filtration membrane 11a is broken, clogging easily occurs and the function of the backup is not easily exerted. When the protrusion gap d is less that 1/2 times the depth L, the gap between surfaces of the pleated filters becomes excessively small. Although the filtering surface is fixed by the supports, the shape of the surface is constantly changed by the rotation and a jet flow of cleaning water. When the gap between the filtration membranes is small, the filtration membranes easily come in contact with each other as a result of this change in the shape, which may easily cause a problem in that breakage is easily generated by, for example, friction between surfaces.

Figure 6 is a block diagram showing an example of a system configuration in which the liquid filtering device described above is used as a ballast water treatment apparatus. The system shown in Fig. 6 is carried in a ship, and seawater is filtered and stored. A ballast water treatment apparatus typically includes a filtering device unit and a sterilization unit constituted by means of ultraviolet light or the like. The present invention can be used as the filtering device unit. Seawater is introduced from the ocean outside a ship into the device through a water intake flow path 47 by an action of a pump 110. A liquid filtering device 100 is a liquid filtering device that performs filtration while rotating a cylindrical filter in which a filtering surface is disposed on a side surface of a cylinder, as described above. The seawater sent to the liquid filtering device 100 through an untreated water flow path 41 is separated into filtered water and discharge water. The discharge water is again returned to the ocean through a discharge water flow path 46, and the filtered water is sent to a filtered water flow path 45. The filtered water is then subjected to sterilization of microbes with an ultraviolet irradiation device 120 and stored in a ballast water tank 130 through a tank flow path 48. The ultraviolet irradiation device 120 is described as an example of the means of the sterilization unit. However, the means may be replaced by known alternative means such as the use of an agent. Regarding the treatment of ballast water, on the basis of the requirement that a large amount of seawater is treated in as short a time as possible, an increase in the size of a filter, continuous cleaning, etc. are required, and ability to detect an abnormal state and an appropriate action are also required. According to the device of the present invention, these can be realized by employing a relatively simple structure.

### Industrial Applicability

The liquid filtering device of the present invention can be continuously driven at a stable high permeation flow rate by rotational cleaning. Therefore, the liquid filtering device of the present invention can be suitably used for preliminary filtration treatment for removing foreign matter, contaminants, and microbes in water particularly in the cases of a water treatment of a large amount of water to be treated, for example, seawater desalination, the use of brackish water/seawater for purposes such as ballast water, and the treatment of sewage water, human sewage, or industrial wastewater. Furthermore, the liquid filtering device of the present invention is suitable for the treatment of water having a high suspensoid content and a concentration treatment, and thus can also be used in the field of collection of valuable recyclable materials, for example, in the field of food.

## Claims

1. A liquid filtering device comprising a filtration membrane unit; cleaning means that cleans a filtering surface of the filtration membrane unit from a side to which a water to be filtered is supplied; and pressure-detecting means that detects a differential pressure between before and after filtration by the filtration membrane unit, wherein the filtration membrane unit includes two filtration membranes.

2. The liquid filtering device according to Claim 1, wherein the cleaning means is means that ejects the water to be filtered toward the filtering surface, and cleaning by the cleaning means and filtration by the filtration membrane unit are performed at the same time.

3. The liquid filtering device according to Claim 1 or 2, wherein the filtration membrane unit includes two filtration membranes disposed on a side surface of a cylindrical shape, the filtration membranes each having pleats with folds having alternating protrusions and recesses in a radial direction of the cylindrical shape.

4. The liquid filtering device according to Claim 3, wherein a gap between the two filtration membranes in the radial direction of the cylinder is 1/2 times or more and less than 1 times a depth between a protrusion and a recess of the pleats.

5. The liquid filtering device according to Claim 3 or 4, wherein the filtration membrane unit is configured to rotate about an axis of the cylindrical shape, and the cleaning means includes an untreated water nozzle that ejects the water to be filtered toward the filtering surface of the filtration membrane unit.

6. The liquid filtering device according to any one of Claims 1 to 5, further comprising filtration membrane abnormality-detecting means that detects an abnormality of the filtration membranes by an increase in the differential pressure detected by the pressure-detecting means.

7. A ballast water treatment apparatus comprising the liquid filtering device according to any one of Claims 1 to 6, wherein the liquid filtering device is used as a filtering device of seawater, and the ballast water treatment apparatus is carried in a ship.
